# EUROPEAN PATENT APPLICATION

(11) **EP 3 496 013 A1**
(43) Date of publication of application: **12.06.2019**
(21) Application number: 17206090.7
(22) Date of filing: 08.12.2017
(51) Int. Cl.: G06Q 10/02, G06Q 50/12

(54) **METHOD FOR ISSUING A PHYSICAL TOKEN**

(71) Applicant: Zaplox AB, 223 70 Lund (SE)
(72) Inventor: Lundblom, Per-Henrik, 244 41 KÄVLINGE (SE); Wallinius, Mattias, 275 71 LÖVESTAD (SE)
(74) Representative: AWA Sweden AB

(57) **Abstract**

The present invention relates to a method (600) for issuing a physical token (502, 520, 540). A portable electronic device (202) receives (612) a beacon identification message comprising a beacon identity and verifies (616) that the received beacon identity corresponds to a specific beacon identity. The portable electronic device (202) sends (620) a token issuing message comprising information pertaining to the specific beacon identity to a server (102). The sever (102) identifies (624) a specific token issuer (402, 420, 440) based on the information pertaining to the specific beacon identity and sends (628) a token issuing request to the specific token issuer (402, 420, 440). The specific token issuer (402, 420, 440) issues the physical token (502, 520, 540).

## Description

### Technical Field

The present disclosure generally relates to a method for issuing a physical token, wherein an identity of a specific beacon is verified at a portable electronic device and the physical token is issued on a specific token issuer.

### Background Art

The use or mobile phones, and in particular smartphones, have in recent years changed how users interact with different services of various kinds. The smartphone has developed into a tool for everyday tasks such managing travel related information and bookings of different kinds. It is today common to book, purchase and manage a complete travel experience from a smartphone or another portable device such as a tablet or a laptop. Further, in the course of travelling it has become common to check in to various services using a smartphone. There are today offered several services for checking in and checking out of hotels, for checking in to airlines and for other similar services. Similarly, it is today common to book and manage various events, such as concerts and movies by using portable devices of various kinds.

However, managing travel and events are commonly cumbersome and time consuming for a user even when using a smartphone or another portable device. For instance, a user commonly has to que and show up a front desk of a hotel to retrieve a room key at a certain time when checking in to a hotel, although the check in as such can be effected by a smartphone or another portable device.

Similarly, a user may have to que to retrieve boarding cards and baggage tags when checking in to an airline although the check in as such can be effected by a smartphone or another portable device.

### Summary of the Invention

It is an object of the present inventive concept to at least reduce the above problems, and to provide a method for issuing a physical token.

According to a first aspect, this and other objects are achieved by a method for issuing a physical token. The method comprising: sending, from a server to a portable electronic device, a beacon information message comprising a specific beacon identity; storing, in a memory of the portable electronic device, the specific beacon identity; receiving, at the portable electronic device, a beacon identification message comprising a beacon identity, the beacon identification message being transmitted from a beacon; verifying, at the portable electronic device, that the received beacon identity corresponds to the specific beacon identity; sending, from the portable electronic device to the server, a token issuing message comprising information pertaining to the specific beacon identity; identifying, at the server and by accessing a database comprising a plurality of beacon identities each associated with a token issuer, a specific token issuer based on the information pertaining to the specific beacon identity; sending, from the server to the specific token issuer, a token issuing request; and issuing, at the specific token issuer, the physical token.

By means of the present method it is possible to issue a physical token at a specific token issuer, when a portable electronic device has verified that a received beacon identity corresponds to a specific beacon identity. The portable electronic device sends a token issuing message to a server and the server identifies the specific token issuer and sends a token issuing request to the specific token issuer which issues the physical token.

According to the present method, a server sends a beacon information message to a portable electronic device. The beacon information message comprises a specific beacon identity. The server may send the beacon information message in any suitable format using any suitable transfer protocol and data channel. Hence, the beacon information message may be sent in a dedicated format using a dedicated transfer protocol over a dedicated data channel or may be sent in a standard format using a standard transfer protocol over a shared data channel. The beacon information message may be encrypted or sent without being encrypted. As an alternative, the beacon information message may be partially encrypted. The beacon information message may form part of a message sent from the server, meaning that other information or data may be sent at the same time. The beacon information message may be sent as a separate message.

The wording "server" should be construed as any type of electronic device capable of sending and receiving information to and from other electronic devices. The server may further store information or may relay information as received from external storages, such as cloud services, the internet, other servers or remotely located storages. This means that the server may store information or data locally or that the server may access a remotely located storage or storages. Similarly, the server may send information or data to a remotely located storage or storages.

The wording "beacon identity" should be construed as any type of information including an identity of a beacon. The identity of a beacon may be represented in any suitable way as long as a beacon may be identified from the beacon identity.

The wording "portable electronic device" should be construed as any type of electronic device which is suitable to be carried by a user. The portable electronic device may in other words by any type of handheld, wearable or movable device such as smartphone, a tablet, a watch or a laptop to give a few non-limiting examples. Further, the portable electronic device may be capable of sending and receiving information or data to and from other electronic devices, such as servers, network access points, remote storages or similar.

According to the present method, the portable electronic device stores the specific beacon identity received from the server. This means that the portable electronic device has access to the specific beacon identity. The specific beacon identity may be stored in any type of suitable memory including volatile and non-volatile memories.

According to the present method, the portable electronic device receives a beacon identification message. The beacon identification message comprises a beacon identity and is being transmitted from a beacon. The portable electronic device is thus capable of receiving messages transmitted form a beacon and to recognize information in the received message.

The wording "beacon" should be construed as any type of device capable of transmitting a message comprising information or data pertaining to an identity of the beacon. The beacon may transmit the message in any suitable format. The beacon may consequently rely on different transmission techniques, including radio waves, light or sound to give a few non limiting examples. Moreover, commercially available beacons, such as Bluetooth™ beacons of different kinds may advantageously be used. Examples of suitable Bluetooth™ beacons include iBeacon™ from Apple™ and Eddystone™ from Google™. Commercially available beacons are generally designed to transmit their identity at regular intervals in a specific format. Other information than the beacon identity may be typically also included when the beacons transmit their identity.

The wording "beacon identification message" should be construed as any type of message including a beacon identity.

According to the present method, the portable electronic verifies that the received beacon identity corresponds to the specific beacon identity. In order to verify that the received beacon identity corresponds to the specific beacon identity, the portable electronic device may compare the received beacon identity with the stored specific beacon identity, as stored in the memory of the portable electronic device. In other words, the portable electronic device may compare the received beacon identity with the stored specific beacon identity to verify that they are the same. By verifying the received beacon identity corresponds to the specific beacon identity, the portable electronic device may indirectly verify that it is within a transmission range of the specific beacon. In other words, the portable electronic device may indirectly verify that it is in close proximity to the beacon, given that a low energy beacon with a relatively speaking short transmission range is used.

According to the present method, the portable electronic device sends a token issuing message comprising information pertaining to the specific beacon identity to the server. This means that the portable electronic sends a message corresponding to a request for issuing a token to the server, where the message includes information or data pertaining to the specific beacon identity. Hence, the message comprises information pertaining to the specific beacon identity in the sense that the specific beacon may be identified or distinguished from other beacons. In other words, the message may comprise information pertaining to the specific beacon identity in any format as long as the specific beacon may be identified or distinguished from other beacons. The message may comprise the actual beacon identity as received from the specific beacon or may comprise an identifier, in any format, identifying the specific beacon. For instance, if the memory of the portable electronic device stores three specific beacon identities, received from the server, these three specific beacon identities may be designated 1, 2 and 3. This means that the token issuing message may comprise information pertaining to the specific beacon identity by simply referring to one the designated numbers 1, 2 and 3. The portable electronic device may send the token issuing message in any suitable format using any suitable transfer protocol and data channel. The token issuing message may further include information to be included in the physical token to be issued. For instance, in case of an electronic hotel key, information pertaining to the key as such may be included in the token issuing message.

According to the present method, the server identifies a specific token issuer based on the information pertaining to the specific beacon identity. In other words, the server identifies a specific token issuer based on the information pertaining to the specific beacon identity received from the portable electronic device. The server identifies the specific token issuer based on the information pertaining to the specific beacon identity by accessing a database comprising a plurality of beacon identities, where each beacon identity is associated with a token issuer. The database may be located at the server or the server may access a remotely located database, located at a remote storage. The database may be distributed over a plurality of servers or remote storages or may be located at a single location.

The wording "token issuer" should be construed a any type of device capable of issuing a physical token, such as a card encoder, a card writer, a card printer, a card puncher, a label printer, a label encoder, a paper printer or a 3D printer.

According to the present method, the server sends a token issuing request to the specific token issuer. In other words, the server sends a request to the identified specific token issuer to issue a physical token. The server may send the token issuing request in any suitable format using any suitable transfer protocol and data channel. The token issuing request may include particulars of the physical token to be issued. The token issuing request may consequently include information which is to be included in the physical token to be issued. For instance, if the physical token to be issued is a hotel door key, the token issuing request may include information or data of the actual key or may include instructions to the specific token issuer to issue a key exhibiting specific characteristics. Similarly, the token issuing request may include data for issuing a baggage tag, a boarding card, a concert ticket or a movie ticket to give a few non limiting examples. The token issuing request may also include no data to be included in the physical token to be issued, but only instructions to the specific token issuer to issue a physical token having certain characteristics. The token issuer may consequently be capable of encoding or modulating information or data to issue a physical token having certain characteristics.

According to the present method, the specific token issuer issues the physical token. In other words, the specific token issuer issues the physical token in response to receiving the token issuing request from the server.

The wording "physical token" should be construed as any type of media capable of including, exhibiting, showing or holding a specific token or characteristic. The specific token may be unique in the sense that it includes a unique characteristic or code. The physical token may be a NFC token, a RFID token, a magnetic token, bar code token, a QR-code token, an alphanumeric token, a punched card token or a 3D printed token. Typical uses of the physical token include, electronic keys, encrypted electronic keys, punch card keys, coded labels, printed labels, printed machine readable labels, event tickets, baggage tags, boarding cards to give a few non limiting examples.

The method may further comprise: verifying, at the portable electronic device, that the received beacon identity is an authentic beacon identity, which is advantageous in that the security may be improved. According to the present method the authenticity of the received beacon identity may be verified using a plurality of different techniques.

For instance, an Eddystone™ beacon using key rotation may be used and its identity verified by a third party service provider, such as Google™. Alternatively, transmission intervals, signal strengths and/or hardware specific addresses of the beacon transmitting the beacon identification message may be used to verify the authenticity of the beacon, and thus avoid so called spoofed beacons.

The method may further comprise: prior to sending a beacon information message, receiving, at the server, a booking pertaining to a facility or an event, to which facility or event access is granted by means of the physical token; associating a specific token issuer to the specific beacon identity, wherein the specific token issuer is configured to issue the physical token granting access to the facility or event; and configuring the beacon information message to comprise the specific beacon identity associated with the specific token issuer configured to issue the physical token granting access to the facility or event.

By receiving, at the server, a booking pertaining to a facility or an event, to which facility or event access is granted by means of the physical token, the server may associate a specific token issuer to the specific beacon identity, such that the specific token issuer later on may be used to issue the physical token. This means that the specific token issuer may be configured to issue the physical token granting access to the facility or event. In other words, the server may associate a specific beacon with a specific token issuer. Preferably, the specific beacon is located in close proximity to the specific token issuer, such that a user may actuate the specific token issuer while in transmission range of the specific beacon. By configuring the beacon information message to comprise the specific beacon identity associated with the specific token issuer configured to issue the physical token granting access to the facility or event, the specific token issuer later on may be used to issue the physical token.

The booking may comprise time information, and the act of sending the beacon information message may be performed within a predetermined time period associated with the time information. By sending the beacon information message within a predetermined time period associated with time information of the booking, the portable electronic device may receive the beacon information message comprising a specific beacon identity within a time interval being relevant for a specific booking. This means that the portable electronic device may not have access to a specific beacon identity at a time period not being relevant for a specific beacon, which in turn means that the portable electronic device may not spend processing capabilities or battery time on processing received beacon identification messages when not relevant in time. In other words, the portable electronic device may only try to verify that a received beacon identity corresponds to a specific beacon identity when within a relevant predetermined time interval. For instance, if a person carrying the portable electronic device frequently passes a beacon in e.g. a hotel lobby, the portable electronic device will not try to verify that a received beacon identity from the beacon in the hotel lobby corresponds to a specific beacon identity, unless the person has a current booking at the hotel.

The booking may comprise time information, and the beacon information message may be configured to comprise the time information, and wherein the act of sending the token issuing message may be performed within a predetermined time period associated with the time information. This means that token issuing message may be sent within a predetermined time interval being relevant for the booking. In this way, the portable electronic device may only send the token issuing message when deemed relevant for the booking, hence reducing the amount of information or data being sent from the portable electronic device.

The method may further comprise: prior to issuing the physical token, receiving, a confirmation input, to issue the physical token, which is advantageous in that the security may be improved since e.g. a user may confirm that the physical token is to be issued. For instance, a user may confirm when in time the physical token is to be issued and may thus be prepared to receive the physical token, reducing the risk of unauthorized access to the physical token. Further, the user may verify information e.g. displayed on the portable electronic device and/or on or in proximity to the token issuer, before the physical token is issued, hence increasing security.

The confirmation input may comprise an actuation of a button of the specific token issuer, which is advantageous in that a user may initiate the issuing of the physical token and at the same time verify that he or she has actually initiated the issuing of the physical token. The button may be a physical button or a software implemented button displayed on a display or similar.

The confirmation input may comprise an actuation of a button of the portable electronic device, which is advantageous in that a user may initiate the issuing of the physical token and at the same time verify that he or she has actually initiated the issuing of the physical token. The button may be a physical button or a software implemented button displayed on a display of the portable electronic device. The button may be displayed as part of a GUI of an app running on the portable electronic device.

The confirmation input may comprise an input of a confirmation code at the specific token issuer, which is advantageous in that the security may be further improved. A user may for instance be prompted to input a confirmation code displayed on a portable device at the specific token issuer. The token issuer may for this reason include a user input device, such as a keypad, a keyboard or a GUI comprising software implemented buttons shown on a display. The confirmation code may be of any suitable format and may include any number of characters. The confirmation code may for instance be a 4-digit number or a 6-character alphanumeric code to give a few examples.

The confirmation input may comprise an input of a confirmation code at the portable electronic device, which is advantageous in that the security may be further improved. A user may for instance be prompted to input a confirmation code displayed on the specific token issuer at the portable electronic device. The portable electronic device may for this reason include a user input device, such as a keypad, a keyboard or a GUI comprising software implemented buttons shown on a display. The buttons may be displayed as part of a GUI of an app running on the portable electronic device. The confirmation code may be of any suitable format and may include any number of characters. The confirmation code may for instance be a 4-digit number or a 6-character alphanumeric code to give a few examples. The confirmation code displayed on the specific token issuer may be a static code on e.g. a label or may be a dynamic code displayed on e.g. a display. A dynamic code may be changed at a certain time interval or may be displayed in conjunction to issuing a physical token.

The physical token may be one or more of the group consisting of: a NFC token, a RFID token, a magnetic token, bar code token, a QR-code token, an alphanumeric token, a punched card token and a 3D printed token, which is advantageous in that a plurality of different types of tokens may be used.

The token issuer may be one or more of the group consisting of: a card encoder, a card writer, a card printer, a card puncher, a label printer, a label encoder, a paper printer and a 3D printer, which is advantageous in that a plurality of different types of token issuers may be used.

The beacon may be a Bluetooth™ beacon, which is advantageous in that a reliable widely available beacon may be used. Moreover, a large number of smartphones are equipped with Bluetooth™ hardware and includes the capability to receive messages transmitted from a Bluetooth™ beacon.

The beacon may be a low energy Bluetooth™ beacon, which is advantageous in that the transmission range of the beacon may be reduced, which in turn means that the portable electronic device needs to be closer to the beacon to receive the beacon identification message. This indirectly forces a user to actually be physically close to the beacon to receive the beacon identification message. Moreover, the lifetime of a battery powering the beacon may be improved.

A further scope of applicability of the present invention will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief Description of the Drawings

The aspects of the present inventive concept, including its particular features and advantages, will be readily understood from the following detailed description and the accompanying drawings. The figures are provided to illustrate the general structures of the present inventive concept. Like reference numerals refer to like elements throughout.
Fig. 1 is a schematic block diagram of a system used to realize a method for issuing a physical token.
Fig. 2 is a flowchart of a method for issuing a physical token within the system of Fig. 1.
Fig. 3 is a timing diagram showing communication in the system of Fig. 1 when issuing a physical token.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

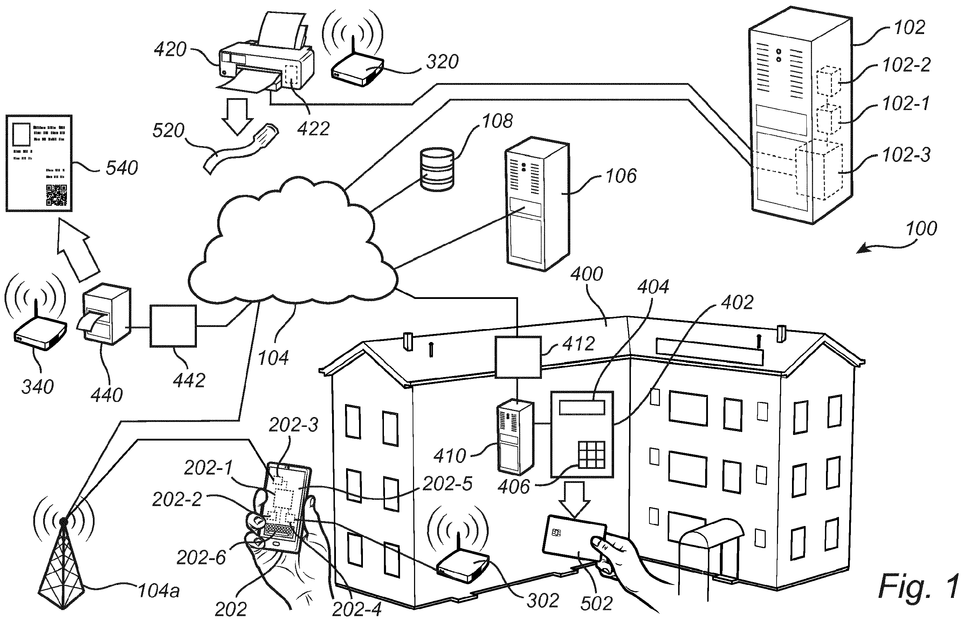

Fig. 1 illustrates a system 100 which may be used to issue a physical token 502, 520, 540.

The system 100 comprises a server 102. The depicted server 102 is connected to a network 104. Typically, the server 102 may be programmed to carry out a set of arithmetic or logical operations. By being connected to a network 104 the server 102 is arranged to send and/or receive data to and/or information from other computing devices. The server 102 comprises a central processing unit, CPU, 102-1, and a storage 102-2, the storage 102-2 may be a non-transitory and/or transitory memory or a hard drive. The storage 102-2 may include a database comprising a plurality of beacon identities each associated with a token issuer.

The server 102, further comprises a transceiver 102-3 arranged to communicate with other devices either through the network 104 or directly by establishing a direct link to other devices. The other devices included in the system 100 will be described in more detail below. The server 102 may thus pass information or data along network links of the network 104 or directly to other devices of the system 100. Typically, data is transferred in the form of packets over the network 104. Connections between the server 102 and other devices are established using either cables or wirelessly. Non limiting examples of data networks 104 are the Internet, an intranet, a local area network and a cellular network. Parts of the data network 104 may be a private data network. Parts of the data network 104 may be a public data network. The system 100 may comprise more devices or fewer devices than the ones illustrated in Fig. 1.

The depicted system 100 further comprises three beacons 302, 320, 340 located at different physical locations. It is to be noted that the system 100 may comprise more beacons 302, 320, 340 or fewer beacons 302, 320, 340 than the ones illustrated in Fig. 1. The beacons 302, 320, 340 will be described in greater detail below.

The system 100 further comprises three token issuers 402, 420, 440. The token issuers 402, 420, 440 are like the beacons 302, 320, 340 located at different physical locations. More specifically, beacon 302 and token issuer 402 are located in close proximity to each other, i.e. token issuer 402 is located within the transmission range of beacon 302. Similarly, beacon 320 and token issuer 420 are located in close proximity to each other and beacon 340 and token issuer 440 are located in close proximity to each other. In fact, beacon 302 and token issuer 402 may be located within the same housing. Similarly, beacon 320 and token issuer 420 may be located within the same housing and beacon 340 and token issuer 440 may be located within the same housing.

Token issuer 402 is connected to the transceiver 102-3 of the server 102 through the network 104, meaning that the token issuer 402 and the server 102 may exchange data with each other. The token issuer 402 may be connected to the server 102, via the network 104, using any suitable connection, such a wire connection and/or a wireless connection. In the depicted system 101, the token issuer 402 is indirectly connected to the server 102 via the network 104, a so called connectivity point 412 and a lock server 410. More specifically, the token issuer 402 is connected to the lock server 410 which in turn is connected to the so called connectivity point 412 which in turn is connected to the network 104.

The token issuer 402, the connectivity point 412, the lock server 410 and the beacon 302 are all located in a hotel 400. Beacon 302 and token issuer 402 are located in close proximity to each other in the lobby of the hotel 400. The token issuer 402 is arranged to issue a physical token 502. In the depicted system of Fig. 1, the token issuer 402 is arranged to issue a RFID token 502 in form of a RFID card 502 which may be used as an electronic key to actuate a door lock at the hotel 400. The token issuer 402 may thus be a card encoder, a card writer, a card printer or similar. Further, the token issuer 402 is provided with a display 404 arranged to display information, such as text and/or images. The token issuer 402 is further provided with a keypad 406 arranged to be actuated by e.g. a user of the token issuer 402. The key pad may include hardware buttons or software implemented buttons displayed on a display.

The lock server 410 located in the hotel 400 is arranged to manage access to hotel rooms and other facilities of the hotel 400 by issuing electronic keys. For the purpose of actuating door locks and similar, RFID cards 502 may be issued by the token issuer 402. The lock server 410 is connected by a wired connection to the connectivity point 412, which in turn communicates with the server 102 through the network 104. It is to be understood that the connectivity point 412 may be a separate entity or may be software implemented in the lock server 410. Further, the connectivity point 412 may be omitted in cases where the lock server is capable of communicating with the server 102 through the network 104. It should further be understood that the connectivity point 412 may be a dedicated hardware or may be formed of a general type computer, a server or similar running a dedicated software. The connectivity point 412 may serve more purposes than communicating with the lock server 410 and the network 104. For instance, a general type property management system, not shown, of the hotel 400 may additionally be connected to the connectivity point 412.

Token issuer 420 is connected directly to the transceiver 102-3 of the server 102, meaning that the token issuer 420 and the server 102 may exchange data with each other. The token issuer 420 may be connected to the server 102 using any suitable connection, such a wire connection or a wireless connection. The token issuer 420 may be connected to the server 102 using TCP/IP, RS232, USB or similar. The token issuer 420 is arranged to issue a physical token 520. In the depicted system of Fig. 1, the token issuer 420 is arranged to issue a printed physical token 520 in form of a printed label 520. The token issuer 420 may thus be a printer, a paper printer, a label printer, a label encoder or similar. The printed label may be a baggage tag for a suitcase to be transported by e.g. an airline. The token issuer 420 is further provided with a button 422 arranged to be actuated by e.g. a user of the token issuer 420.

Token issuer 440 is connected to the transceiver 102-3 of the server 102 through the network 104, meaning that the token issuer 440 and the server 102 may exchange data with each other. The token issuer 440 may be connected to the server 102, via the network 104, using any suitable connection, such a wire connection and/or a wireless connection. In the depicted system 100 the token issuer 402 is indirectly connected to the server 102 via the network 104 and a connectivity point 442. The connectivity point 442 serves the same general purpose as the connectivity point 412, although being directly connected to the token issuer 440. The connectivity point 442 may be omitted and the token issuer 440 may be arranged to communicate directly with the server 102 through the network 104.

The Token issuer 440 is arranged to issue a physical token 540. In the depicted system of Fig. 1, the token issuer 440 is arranged to issue a printed token 540 in form of a ticket 540 including a QR-code. The ticket may be a movie ticket, a concert ticket or similar. The token issuer 440 may thus be any type of suitable printer or similar.

It should be noted that all token issuers 402, 420, 440 of Fig. 1 may be substituted with token issuers of a different kind. Examples of suitable token issuers include a card encoder, a card writer, a card printer, a card puncher, a label printer, a label encoder, a paper printer and a 3D printer.

It should be noted that all physical tokens 502, 520, 540 may be substituted with physical tokens of a different kind. Examples of suitable physical tokes issuers include a NFC token, a RFID token, a magnetic token, bar code token, a QR-code token, an alphanumeric token, a punched card token and a 3D printed token.

In case a 3D printer is used as a token issuer, a physical 3D printed token in form of a key for a traditional mechanical lock may be issued by being printed by the 3D printer.

Now returning to the beacons 302, 320, 340 depicted in Fig. 1. All beacons 302, 320, 340 of Fig. 1 are Bluetooth™ beacons. More specifically, all beacons 302, 320, 340 are low energy Bluetooth™ beacons, meaning that the beacons 302, 320, 340 all have a short transmission range, i.e. a few tens of meters to a few meters. This means that a signal transmitted from each of the beacons 302, 320, 340 may only be received or detected when in close proximity to the respective beacons 302, 320, 340. In practice, the distance to a beacon 302, 320, 340 may be determined at an accuracy level down to about 10 cm. The beacons 302, 320, 340 are all arranged to transmit a beacon identification message comprising a beacon identity at regular intervals. The exact form of the beacon identification message varies depending on the type of beacon used. Important is however that each and every beacon 302, 320, 340 of the system 100 has a unique beacon identity such that each beacon 302, 320, 340 may be identified and distinguished from other beacons 302, 320, 340.

Examples of suitable Bluetooth™ beacons are iBeacon™ provided by Apple™ and Eddystone™ provided by Google™. iBeacon™ and Eddystone™ exhibit somewhat different properties and may advantageously be used in different situations and/or in combination with each other. In fact, iBeacon™ and Eddystone™ technology may be provided in the same beacon 302, 320, 340 to form a so called dual beacon. The iBeacon™ technology has the general advantage that this technology may wake a portable electronic device form sleep mode, while the Eddystone™ technology has the general advantage that a beacon identity may be verified by an external request since the Eddystone™ technology may use key rotation where a key transmitted from the beacon is changed at a regular interval, as is known in the art.

In Fig. 1, depicted beacon 302 and depicted beacon 320 uses the iBeacon™ technology, whereas beacon 340 uses the Eddystone™ technology. It should be noted that any of the depicted beacons may use any beacon technology, such as iBeacon™ or Eddystone™, or a combination thereof to form a dual beacon as described above. Further, other beacon technologies than Bluetooth™ based technologies may be used. For instance, light and/or sound based beacons may be used.

The system 100 further comprises a portable electronic device 202. The portable electronic device 202 may be any type of electronic device 202 which is suitable to be carried by a user. The portable electronic device 202 may in other words by any type of handled, wearable or movable device such as smartphone, a tablet, a watch or a laptop to give a few non-limiting examples. In Fig. 1, the depicted portable electronic device 202 is a smart phone 202. The portable electronic device 202 comprises a central processing unit, CPU, 202-1, and a memory 202-2, the memory 202-2 may be a non-transitory and/or transitory memory or a hard drive.

The portable electronic device 202, further comprises a transceiver 202-3 arranged to communicate wirelessly with other devices through the network 104 via a cellular network 104a. The cellular network 104a may be any type of cellular network used in mobile communications, such as a GSM or UMTS based cellular network. The transceiver 202-3 of the portable electronic device 202 may further or as an alternative be arranged to communicate wirelessly with other devices through the network 104, by connecting to the network 104 via a wireless local area network, WLAN. The WLAN may in turn be connect directly to the network 104 or indirectly by wires or additional wireless devices. The portable electronic device 202, further comprises a receiver 202-4 arranged to receive signals transmitted form a beacon 302. In the depicted portable electronic device 202 of Fig. 1, the receiver 202-4 is a Bluetooth™ receiver arranged to receive signals from e.g. Bluetooth™ beacons. The portable electronic device 202 of Fig. 1 is within the transmission range of beacon 302 and may thus receive signals transmitted from the beacon 302.

The portable electronic device 202, further comprises a display 202-5. The display 202-5 is arranged to display a set of software implemented buttons 202-6. Hence, the display 202-5 may display a set of software implemented buttons 202-6 when desired. The set of software implemented buttons 202-6 may form part of a GUI of a app running on the portable electronic device.

The system 100, further comprises a remote storage 108 connected to the network 104. The remote storage 108 may be any type of storage and may include a transitory memory, and/or a non-transitory memory or a hard drive. The remote storage 108 may include a database comprising a plurality of beacon identities each associated with a token issuer.

The system 100, further comprises a third party server 106 connected to the network 104. The third party server 106 may be used to verify that a received beacon identity is an authentic beacon identity, by sending a verification request from the portable electronic device 202 to the third party server 106. The third party server 106 may thus be arranged to verify the authenticity of a received beacon identity and to send a verification message to the portable electronic device 202. In the depicted embodiment of Fig. 1, the third party server is hosted by Google™ and may be used to verify the authenticity of the Eddystone™ beacon 340 of the system 100.

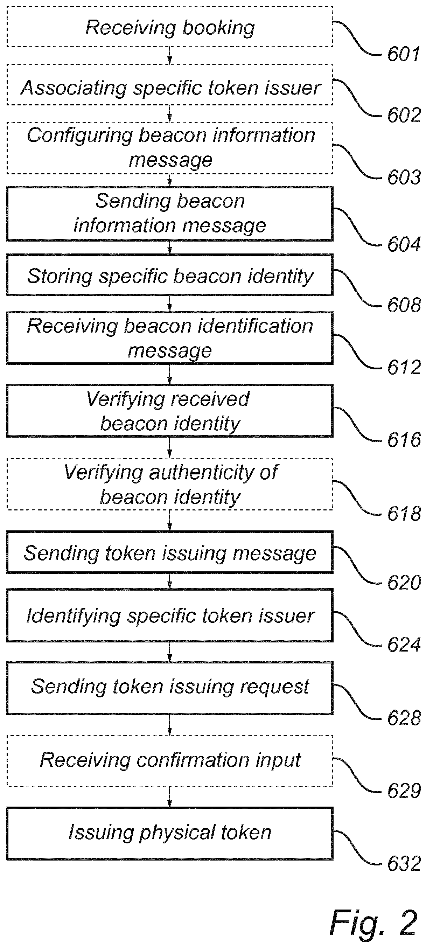

A method 600 for issuing a physical token 502, 520, 540 by means of the system 100 will now be described with reference to Figs. 1 and 2. The method 600 will initially be described in a context, where a RFID token 502 in form of a RFID card 502 which may be used as an electronic key to actuate a door lock at the hotel 400, is issued by token issuer 402 of system 100 depicted in Fig. 1. It is however to be understood that different types of physical tokens 502, 520, 540 may be issued by the token issuers 402, 420, 440 of the system 100. It is further to be understood that physical tokens may be issued in different contexts, such as baggage tags for a suitcase to be transported or tickets of various kinds.

As a first act, the server 102 is sending 604 a beacon information message comprising a specific beacon identity to the portable electronic device 202. The beacon information message is sent via the network 104 and the cellular network 104a to the portable electronic device 202. The beacon information message may as discussed above be sent in any suitable format as long as at least one specific beacon identity is included in the message. The server 102 may by means of its CPU 102-1 retrieve the specific beacon identity from its storage 102-2 or from the remote storage 108 and prepare the beacon information message to be sent from the transceiver 102-3. In the described method 600, the identity of beacon 302 is sent 604 form the server 102 to the portable electronic device 202. It should however be understood that the server 102 may send the identity of either beacon 302, 320, 340 of the system 100, and that a plurality of beacon identities may be included in the beacon information message. The sent beacon information message is received by the transceiver 202-3 of the portable electronic device 202. The CPU 202-1 is arranged to process the received beacon information message and to extract the specific beacon identity.

Next, the portable electronic device 202 is storing 608 the specific beacon identity, i.e. the identity of beacon 302, in the memory 202-2. The CPU 201-1 is arranged to write to the memory 202-2. The memory 202-2 may as discussed be a non-transitory and/or transitory memory or a hard drive.

Next, the portable electronic device 202 is receiving 612 a beacon identification message transmitted from a beacon 302, 320, 340. The beacon identification message comprising a beacon identity. The depicted electronic device 202 of Fig. 1 is capable of receiving 612 a beacon identification message transmitted from either Bluetooth™ beacon 302, 320, 340 depicted in Fig. 1 by means of the receiver 202-4. However, as depicted in Fig. 1 and discussed above, the portable electronic device 202 is only within the transmission range of beacon 302, meaning that the beacon identification message transmitted from beacon 302 will be received 612 at the electronic device 202 by means of the receiver 202-4. The CPU 202-1 is arranged to process the received beacon identification message and to extract the beacon identity of beacon 302.

Next, the portable electronic device 202 is verifying 616 that the received beacon identity corresponds to the specific beacon identity. The CPU 202-1 is thus arranged to compare the stored specific beacon identity, stored in the memory 202-2, with the beacon identity received in the beacon identification message and to verify that they are the same. In other words, the CPU 202-1 is arranged to verify that the identity of beacon 302 is comprised in the received beacon identification message received from beacon 302.

Next, the portable electronic device 202 is sending 620 a token issuing message comprising information pertaining to the specific beacon identity, i.e. the identity of beacon 302, to the server 102. The CPU 202-1 of the portable electronic device 202 is arranged to prepare the token issuing message comprising information pertaining to the identity of beacon 302 and to send it by means of the transceiver 202-2. As discussed above, the token issuing message may include information to be included in the physical token 502 to be issued. The token issuing message is sent to the server 102 via the cellular network 104a and the network 104. The token issuing message is received by the transceiver 102-3 of the server 102. The CPU 102-1 is arranged to extract information from the token issuing message received.

Next, the server 102 is identifying 624 a specific token issuer 402 based on the information pertaining to the specific beacon identity, i.e. the identity of beacon 302. The server 102 is arranged to access a database comprising a plurality of beacon identities each associated with a token issuer 402, 420, 440. More specifically, the CPU 102-1 is arranged to access the database. The database may be stored in the storage 102-2 of the server or may be stored at the remote storage 108, or the database may be distributed, i.e. stored on a plurality of different storages. The CPU 102-1 is arranged to extract information from the database identifying a specific token issuer 402 based on the received information pertaining to the identity of beacon 302. In other words, token issuer 402 is associated with beacon 302. In practice token issuer 402 beacon 302 are located in close proximity to each other as discussed above. This means that the portable electronic device 202 will have to be in close proximity to the token issuer 402 to receive the beacon identification message transmitted from the beacon 302. This means in turn that the portable electronic device will have to be in close proximity to the token issuer 402 to be able to send the token issuing message. Hence, the portable electronic device 202 will have to be in close proximity to the token issuer 402 in order for the token issuer 402 to actually issue physical token 502.

Next, the server 102 is sending 628 a token issuing request to the specific token issuer 402. The CPU 102-1 of the server is arranged to prepare the token issuing request and to send it to the token issuer 402 by means of the transceiver 102-2 via the network 104. As discussed above, the token issuing request may include particulars of the physical token to be issued. In the system depicted in Fig. 1, the token issuing request is received at the connectivity point 412 which forwards the token issuing request to the lock server 410. The connectivity point 412 may be arranged to alter the format of the token issuing request and to forward it in a suitable format to the lock server 410. The lock server 410 then sends the token issuing request to the token issuer 402. The token issuer 402 receives the token issuing request from the lock server 410. The token issuer 402 is arranged to receive token issuing requests from the lock server 410 and to issue physical tokens 502.

Next, the token issuer 402 issues 632 a physical token 502. In the system 100 of Fig. 1, the token issuer 402 is arranged to issue an RFID token 502 in form of an RFID card 502 which may be used as an electronic key to actuate a door lock of a hotel room at the hotel 400.

The method 600 may further comprise verifying 618, at the portable electronic device 202, that the received beacon identity is an authentic beacon identity. In the above described method 600 for issuing the physical token 502 by means of the system 100, the received beacon identity of beacon 302 may be authenticated or verified in several ways at the portable electronic device 202. Correspondingly, a received beacon identity of beacons 320, 340 may be authenticated or verified by the portable electronic device 202 as described below.

The interval with which the beacon 302 transmits its beacon identification message may be verified. A beacon, e.g. 302 may be set up to transmit its beacon identification message at a regular time interval, i.e. once every two seconds. This means that an irregular time interval or an unexpected time interval may be indicative of that a so called spoofed beacon is used either alone or in combination with the beacon whose identity is to be verified by means of verifying that the received beacon identity is an authentic beacon identity.

Similarly, the signal strength of a beacon identification message may be monitored to verify the that the received beacon identity is an authentic beacon identity. More specifically, if a so called spoofed beacon is used either alone or in combination with the beacon, e.g. beacon 302, whose identity is to be verified, the signal strength may fall outside an expected range or the signal strength may vary from beacon identification message to beacon identification message. This because, both the beacon whose identity is to be verified and the so called spoofed beacon will transmit beacon identification messages from different distances of the portable electronic device 202.

Alternatively or additionally, a hardware specific address optionally included in beacon identification message of the beacon, e.g. beacon 302, whose identity is to be verified, may be verified.

Alternatively or additionally, information pertaining to a key rotation may optionally be included in a beacon identification message of the beacon, e.g. beacon 340, whose identity is to be verified. This may be the case when using a beacon using Eddystone™ technology, such as beacon 340. In this case, the authenticity of the beacon identity may be verified by sending a request to the third party server 106 connected to the network 104 as described above.

The method 600 may further comprise, receiving 601, at the server 102, a booking. The booking may pertain to a facility 400 or an event, to which facility 400 or event access is granted by means of the physical token 502. In the above method 600 for issuing a RFID token 502 in form of an RFID card 502 which may be used as an electronic key to actuate a door lock at the hotel 400, the booking typically pertains to a hotel booking of a hotel room. The booking is received at the server 102 prior to sending 604 the beacon information message form the server 102.

The method 600 may further comprise, associating 602 the specific token 402 issuer to the specific beacon identity, wherein the specific token issuer 402 is configured to issue the physical token 502 in form of a RFID card 502 granting access to a hotel room of hotel 400. The server 102 may thus be arranged to associate the specific token issuer 402 to the specific beacon identity of beacon 302.

The method 600 may further comprise, configuring 603 the beacon information message to comprise the specific beacon identity, i.e. the identity of beacon 302, associated with the specific token issuer 403 configured to issue the physical token 502.

The booking may comprise time information, i.e. information representing a certain time or a plurality of certain times. The CPU 102-1 of the server 102 may be arranged to extract the time information from the booking and to send 604 the beacon information message within a predetermined time period associated with the time information. This means that the server may only send 604 the beacon information message when relevant for the booking of the hotel 400. In other words, the server 102 may send 604 the beacon information message before a user of the portable electronic device 202 is to check in to the hotel 400, but not earlier than when check in is allowed. Alternatively, the server may send 604 the beacon information message one day prior to check in or 6 hours prior to check in to give a few non limiting examples.

The beacon information message may be configured to comprise the time information of the booking. The server 102 may thus be arranged to include the time information in the beacon information message. By doing this, the act of sending 620 the token issuing message from the portable electronic device 202 may be performed within a predetermined time period associated with the time information. This means that the portable electronic device 202 may only send 620 the token issuing message when relevant for the booking of the hotel 400. In other words, the portable electronic device 202 may send 620 the token issuing message when a user of the portable electronic device 202 is to check in to the hotel 400, but not earlier then when check in is allowed.

The method 600 may further comprise receiving 629 a confirmation input to issue the physical token 502, prior to issuing the physical token 502, i.e. the RFID card 502, issued by the token issuer 402.

The confirmation input may be realized in many different ways. Each of the described ways may be used with any of the token issuers 402, 420, 440 of the system 100. However, it is to be understood that the token issuer 402, 420, 440 in question need to have a relevant hardware configuration, e.g. include a display, a keypad or similar when needed.

The confirmation input may typically be effected by a user of the system 100 issuing a physical token 502, 520, 540. The confirmation input may include pushing a button 202-6, 406, 422 on the token issuer 402, 420, 440 used to issue the physical token 502 ,520, 540 in question, or on the portable electronic device 202. The button may be a hardware button 406, 422 or a software implemented button 202-6, 406. The pushing of the button 202-6, 406, 422 may typically follow some form of verification, where a user verifies information displayed on the token issuer 402, 420, 440 used to issue the physical token 502 ,520, 540 in question, and/or on the portable electronic device 202. The information may be displayed on the display 202-5 of the portable electronic device 202, on a display 404 of a token issuer 402 or on a static label or similar on or close to a token issuer 402, 420, 440. The displayed information may be a room number to a hotel room, a booking reference, a random number, a 4-digit code to give a few non limiting examples.

The confirmation input may include input of a confirmation code on the token issuer 402, 420, 440 used to issue the physical token 502 ,520, 540 in question or on the portable electronic device 202. The confirmation code may be inputted by e.g. actuating a set of software implemented buttons 202-6 on the portable electronic device 202 or by actuating a keypad 406 of a token issuer 402. Typically, the confirmation code is displayed on either of the token issuer 402, 420, 440 or the portable electronic device 202 and entered on the other entity. The confirmation code may be a room number to a hotel room, a booking reference, a random number, a 4-digit code to give a few non limiting examples.

Above, the method 600 has mainly been described in a context, where a RFID token 502 in form of a RFID card 502 which may be used as an electronic key to actuate a door lock at the hotel 400 is issued by token issuer 402 of system 100 depicted in Fig. 1. It is however to be understood that other types of physical tokens 520, 540 may be issued using other token issuers 420, 440 of the system 100 in a similar manner.

For instance, the system 100 may be used to issue a physical token 520 in form of a baggage tag 520 by the token issuer 420. The issuing of the baggage tag 520 is similar to the issuing of the RFID card 502 and will consequently not be described in greater detail to avoid undue repetition.

Similarly, the system 100 may be used to issue a physical token 540 in form of a ticket 540 by the token issuer 440. The issuing of the ticket 540 is similar to the issuing of the RFID card 502 and will consequently not be described in greater detail to avoid undue repetition. It is to be noted the token issuer 440 includes no input devices, such as buttons or keypads, why the movie ticket 540 may issue automatically based on proximity. In other words, the movie ticket 540 may be issued automatically when a portable electronic device is close enough to the beacon 340, and hence indirectly close enough to the token issuer 440.

It is to be understood that the system 100 may be used for issuing physical tokens 502, 520, 540 at numerous token issuers 402, 420, 440. For instance, the system 100 may be set up to include hundreds or even thousands of hotels 400, where each hotel 400 includes a beacon 302 and a token issuer 402, or a plurality of beacons 302 and token issuers 402. The beacons 302 and token issuers 402 may be off different kinds and may be arranged to issue different types of physical tokens 502.

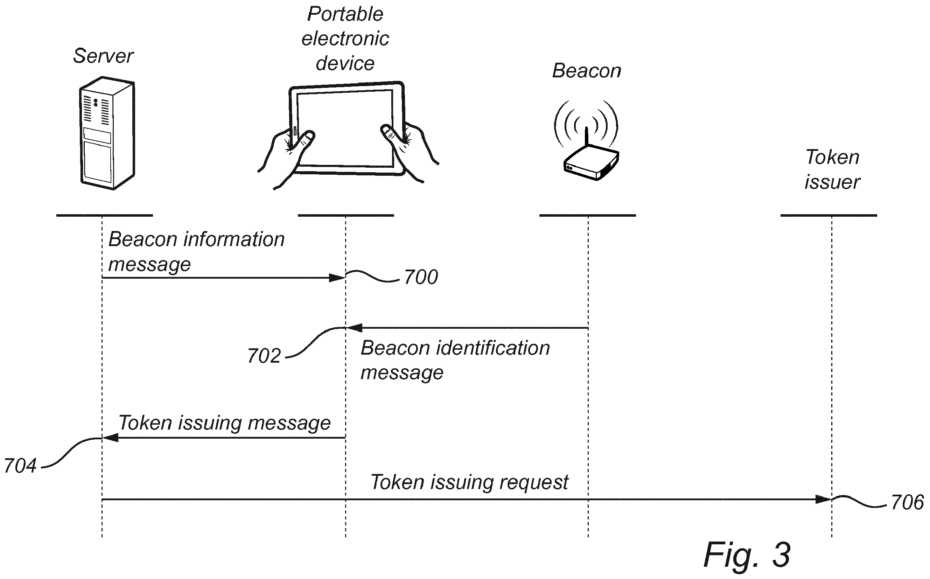

In Fig. 3 an example of the signaling that may be involved when issuing the physical token 502 by the token issuer 402 in the system 100 is illustrated. It is to be understood that other variants of signaling may as well be used when issuing a physical token in the system 100. In fact, issuing the physical tokens 520 and 540 of Fig. 1 requires a different signaling, why the signaling described below is to be viewed as an illustrating non limiting example of signaling that may be involved when issuing a physical token 502, 520, 540.

The signaling for issuing the physical token 502 by the token issuer 402 is started by the server 102 sending a beacon information message 700 to the portable electronic device 202. The beacon information message 700 comprises a specific beacon identity. In the present example, the specific beacon identity of beacon 302 is sent to the portable electronic device 202. The beacon information message 700 is sent via the network 104 and the cellular network 104a of Fig. 1. The specific beacon identity of beacon 302 is stored in the memory 202-2 of the portable electronic device 202 as described above.

The signaling continues with the portable electronic device 202 receiving a beacon identification message 702 from the beacon 302. The beacon identification message 702 is transmitted from the beacon 302 and comprises the beacon identity of beacon 302. In response to receiving the beacon identification message 702, the portable electronic device 202 verifies that the received beacon identity of beacon 302 corresponds to the stored specific beacon identity of beacon 302.

The signaling then continues with the portable electronic device 202 sending a token issuing message 704 comprising information pertaining to the specific beacon identity of beacon 302. The server 102 then identifies the specific token issuer 402 based on the information pertaining to the specific beacon identity of beacon 302, by accessing a database stored in the storage 102-2 of the server or on the remote storage 108.

The signaling then continues with the server 102 sending a token issuing request 706 to the to the specific token issuer 402 of Fig. 1. The token issuing request 706 is sent via the network 104. In response to receiving the token issuing request 706, the token issuer 402, issues the physical token 502. Hence, the token issuer 402 issues a physical token in form of a RFID card 502 which may serve as a key for actuating a lock at a hotel room door at the hotel 400.

The person skilled in the art realizes that the present invention by no means is limited to the preferred variants described above. On the contrary, many modifications and variations are possible within the scope of the appended claims. Additionally, variations to the disclosed variants can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A method (600) for issuing a physical token (502, 520, 540), the method comprising:
sending (604), from a server to a portable electronic device (202), a beacon information message (700) comprising a specific beacon identity,
storing (608), in a memory (202-2) of the portable electronic device (202), the specific beacon identity,
receiving (612), at the portable electronic device (202), a beacon identification message (702) comprising a beacon identity, the beacon identification message being transmitted from a beacon (302, 320, 340),
verifying (616), at the portable electronic device (202), that the received beacon identity corresponds to the specific beacon identity,
sending (620), from the portable electronic device (202) to the server (102), a token issuing message (704) comprising information pertaining to the specific beacon identity,
identifying (624), at the server (102) and by accessing a database comprising a plurality of beacon identities each associated with a token issuer (402, 420, 440), a specific token issuer (402, 420, 440) based on the information pertaining to the specific beacon identity,
sending (628), from the server (102) to the specific token issuer (402, 420, 440), a token issuing request (706), and
issuing (632), at the specific token issuer (402, 420, 440), the physical token (502, 520, 540).

2. The method (600) according to claim 1, further comprising:
verifying (618), at the portable electronic device (202), that the received beacon identity is an authentic beacon identity.

3. The method (600) according to claim 1 or 2, further comprising:
prior to sending (604) a beacon information message (700), receiving (601), at the server (102), a booking pertaining to a facility (400) or an event, to which facility or event access is granted by means of the physical token (502, 520, 540),
associating (602) a specific token issuer (402, 420, 440) to the specific beacon identity, wherein the specific token issuer (402, 420, 440) is configured to issue the physical token (502, 520, 540) granting access to the facility (400) or event, and
configuring (603) the beacon information message (700) to comprise the specific beacon identity associated with the specific token issuer (402, 420, 440) configured to issue the physical token (502, 520, 540) granting access to the facility (400) or event.

4. The method (600) according to claim 3, wherein the booking comprises time information, and wherein the act of sending (604) the beacon information message (700) is performed within a predetermined time period associated with the time information.

5. The method (600) according to claim 3, wherein the booking comprises time information, wherein the beacon information message (700) is configured to comprise the time information, and wherein the act of sending (620) the token issuing message (704) is performed within a predetermined time period associated with the time information.

6. The method (600) according to any one of the preceding claims, further comprising:
prior to issuing (532) the physical token (502, 520 ,540), receiving (629), a confirmation input, to issue the physical token (502, 520 ,540).

7. The method (600) according to claim 6, wherein the confirmation input comprises an actuation of a button (406, 422) of the specific token issuer (402, 420, 440).

8. The method (600) according to claim 6 or 7, wherein the confirmation input comprises an actuation of a button (202-6) of the portable electronic device (202).

9. The method (600) according to any one of claims 6-8, wherein the confirmation input comprises an input of a confirmation code at the specific token issuer (402, 420, 440).

10. The method (600) according to any one of claims 6-9, wherein the confirmation input comprises an input of a confirmation code at the portable electronic device (202).

11. The method (600) according to any one of the preceding claims, wherein the physical token (502, 520, 540) is one or more of the group consisting of: a NFC token, a RFID token, a magnetic token, bar code token, a QR-code token, an alphanumeric token, a punched card token and a 3D printed token.

12. The method (600) according to any one of the preceding claims, wherein the token issuer (402, 420, 440) is one or more of the group consisting of: a card encoder, a card writer, a card printer, a card puncher, a label printer, a label encoder, a paper printer and a 3D printer.

13. The method (600) according to any one of the preceding claims, wherein the beacon (302, 320, 340) is a Bluetooth™ beacon.

14. The method (600) according to any one of the preceding claims, wherein the beacon (302, 320, 340) is a low energy Bluetooth™ beacon.
